Europäisches Patentamt

European Patent Office

Office européen des brevets

(11) Numéro de publication: **0 045 269
B1**

(12) **FASCICULE DE BREVET EUROPEEN**

(45) Date de publication du fascicule du brevet:
04.06.86

(51) Int. Cl.⁴: **B 62 D 55/104,** B 60 G 15/12,
F 16 F 9/46, F 16 F 9/42

(21) Numéro de dépôt: **81401221.7**

(22) Date de dépôt: **29.07.81**

(54) **Suspension oléopneumatique.**

(30) Priorité: **29.07.80 FR 8016674**

(43) Date de publication de la demande:
**03.02.82 Bulletin 82/5**

(45) Mention de la délivrance du brevet:
**04.06.86 Bulletin 86/23**

(84) Etats contractants désignés:
**DE GB IT**

(56) Documents cités:
**DE - A - 1 455 930
DE - A - 2 038 744
FR - A - 425 881
FR - A - 956 413
FR - A - 1 398 657
FR - A - 2 313 605
US - A - 1 500 277
US - A - 1 797 751
US - A - 2 953 367
US - A - 3 103 993
US - A - 3 602 470
US - A - 3 727 961**

(73) Titulaire: **LUCAS FRANCE S.A., 11, rue Lord Byron,
F-75008 Paris (FR)**

(72) Inventeur: **Pascal, Yves, 51, rue Périer,
F-92120 Montrouge (FR)**
Inventeur: **Chauveau, Jean-Marc, 2/219 Clos St-Vigor,
F-78220 Viroflay (FR)**
Inventeur: **Fendeleur, Jean-Pierre, 2 bis, Chemin de
Versailles, F-92500 Rueil-Malmaison (FR)**

(74) Mandataire: **Martin, Jean-Jacques et al, Cabinet
REGIMBEAU 26, Avenue Kléber, F-75116 Paris (FR)**

ACTORUM AG

## Description

La présente invention concerne les suspensions oléopneumatiques, plus particulièrement pour des véhicules lourds et en particulier, mais non exclusivement, pour des véhicules tous terrains chenillés ou à roues.

Il existe de nombreux dispositifs de suspension connus sous le nom générique d'amortisseur qui comprennent généralement un ressort fluidique et des moyens d'amortissement par circulation de fluide incompressible à travers des clapets de laminage. Ces dispositifs donnent de bons résultats quand il sont associés à des véhicules peu lourds ou alors qui ne sont utilisés que pendant des temps très courts. Par contre, sur des véhicules comme par exemple des véhicules terrestres tous terrains, les systèmes d'amortissement sont constamment sollicités et posent donc de grands problèmes, notamment de dissipation de la chaleur obtenue par la transformation bien connue de l'énergie mécanique en énergie calorifique. La présente invention a pour but de réaliser une suspension oléopneumatique assurant les fonctions de ressort et amortissement de façon constante et fiable tout en ayant des facilités de maintenance et malgré tout en conservant une structure modulaire.

On connaît par le document FR-A-1 398 657 un amortisseur hydraulique correspondant au préambule de la revendication 1 et dans lequel il existe plusieurs chambres de fluide hydraulique à volume variable et un récipient de fluide; les chambres sont reliées à ce récipient de fluide par des moyens de liaison qui établissent selon les cas, une liaison directe ou une liaison à travers des clapets à ressort. Mais le fonctionnement de ces moyens de liaison n'est plus modifiable après construction et ces moyens comprennent des clapets diversement tarés qui ont des effets différents, mais non modifiables de laminage du fluide hydraulique.

L'invention a donc pour objet une suspension à amortisseur comprenant:
— des moyens fonctionnels de liaison avec un moyen de roulement,
— des moyens élastiques exerçant une force antagoniste sur les moyens fonctionnels,
— des moyens d'amortissement hydraulique coopérant avec lesdits moyens élastiques et comprenant des premiers moyens limitant une première chambre à volume variable de fluide incompressible, des deuxièmes moyens limitant une deuxième chambre à volume variable de fluide incompressible, les volumes de ces chambres variant en sens opposés, des moyens limitant un volume tampon, des moyens de laminage du fluide incompressible, des moyens de liaison entre lesdites chambres et le volume tampon, caractérisée en ce que des moyens commandables sont montés sur les moyens de liaison pour raccorder les chambres au volume tampon à travers les moyens de laminage quand le volume de ces chambres diminue, et pour raccorder par une liaison directe ces mêmes chambres au même volume tampon quand leur volume augmente.

Les premiers moyens pour faire varier le volume d'une première chambre de fluide incompressible sont constitués par un premier piston coulissant dans un premier logement par rapport à une première paroi de ce logement, ledit premier piston étant relié auxdits moyens fonctionnels de liaison.

Les seconds moyens pour faire varier le volume d'une seconde chambre de fluide incompressible sont constitués par un second piston coulissant dans un second logement par rapport à une seconde paroi de ce logement, ledit second piston étant relié auxdits moyens fonctionnels de liaison.

D'autres caractéristiques et avantages de la présente invention apparaîtront au cours de la description suivante donnée en regard des dessins annexés à titre illustratif mais nullement limitatif dans lesquels:
— la fig. 1 représente sous forme d'une coupe schématique un mode de réalisation d'une suspension oléopneumatique selon l'invention,
— les figs 2 et 3 représentent, vu en coupe suivant deux plans perpendiculaires, un mode de réalisation d'une partie de la suspension oléopneumatique selon la fig. 1, qui a été représentée schématiquement sur cette figure,
— la fig. 4 représente, sous forme schématique, un autre mode de réalisation d'une partie d'une suspension oléopneumatique selon l'invention.

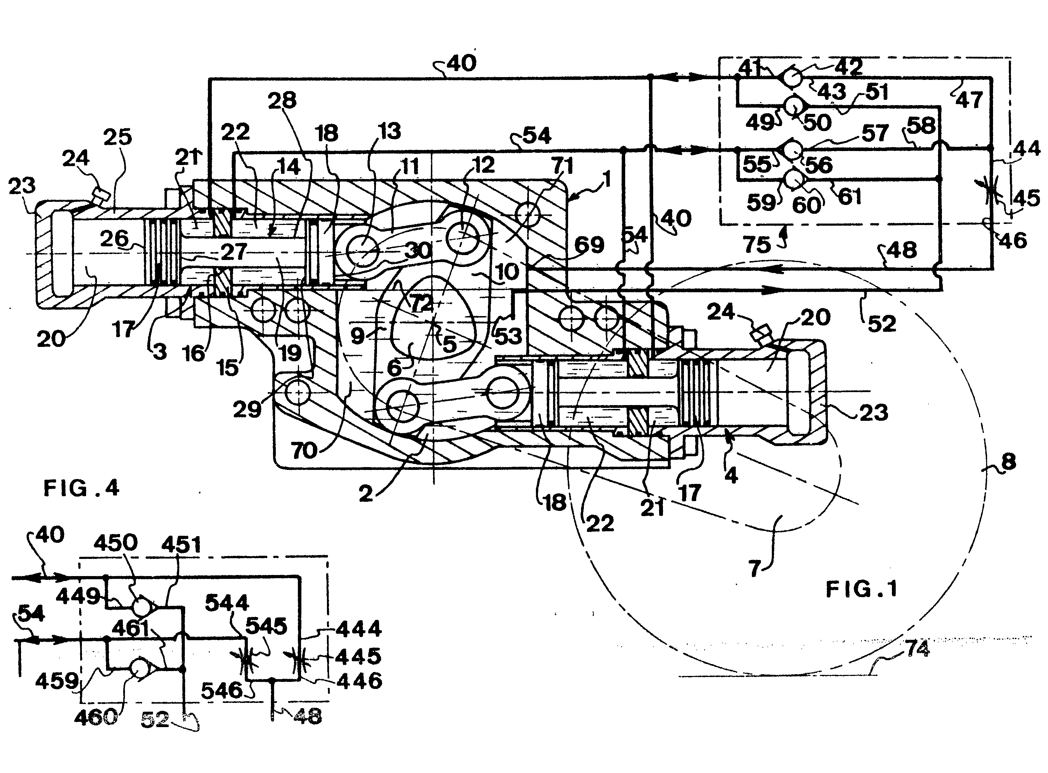

Une suspension oléopneumatique, comme représentée sur la fig. 1, comprend un corps ou carter principal 1 apte à être fixé sur la caisse ou le châssis d'un véhicule par tous moyens, vis boulons, etc.

Ce carter 1 comporte une cavité centrale 2 dans laquelle débouchent dans ce mode de réalisation deux logements latéraux 3 et 4 disposés symétriquement par rapport à un point 5. Un axe 6 traverse la paroi de la cavité centrale 2 au moyen d'un passage étanche pour soutenir à l'extérieur de la cavité un levier 7 sur lequel est fixé un moyen de roulement 8 comme par exemple une roue, avec son pneumatique, ou un galet de guidage d'une chenille.

Sur la partie de l'axe 6 intérieur à la cavité centrale 2, est fixé un vilebrequin 9 par exemple au moyen d'un assemblage «polygon» comme représenté ou de cannelures, etc.

Ce vilebrequin affecte la forme d'une pièce oblongue symétrique par rapport au point 5 mentionné précédemment.

Comme dit ci-avant, le carter 1 a une forme symétrique et les moyens qui sont illustrés dans les deux logements latéraux 3 et 4 sont parfaitement identiques, ils porteront à titre indicatif les mêmes références, et comme, de plus, leurs fonctions sont aussi identiques et que leurs effets ne font que s'additionner, il sera, par la suite, fait référence pour l'explication uniquement à la partie de l'amortisseur oléopneumatique comprenant essentiellement le vilebrequin et tous les éléments coopérant directement ou indirectement avec le logement latéral 3. L'homme de l'art pourra très facilement en déduire les fonctions et le fonctionnement des moyens coopérant avec l'autre logement latéral 4.

En conséquence, l'extrémité 10 du vilebrequin 9 supporte une biellette 11 montée pivotante autour d'un axe 12, l'autre extrémité de cette biellette étant montée pivotante autour d'un autre axe 13 sur un équipage mobile 14. Cet équipage mobile 14 peut coulisser dans le logement 3 qui, dans ce mode de réalisation, comporte une cloison de séparation 15 entourant l'équipage mobile 14 au moyen d'un passage de préférence étanche 16 qui sert de guidage. Les deux extrémités de l'équipage mobile 14 sont conformées en piston respectivement 17 et 18 qui sont situés dans le logement 3 de part et d'autre de la cloison séparatrice 15 et sont reliés par une tige 19 d'un diamètre inférieur au diamètre intérieur du logement 3. Comme dit précédemment, le logement latéral 3 débouche dans la cavité 2 et est obturé à son autre extrémité opposée à celle située dans la cavité 2.

De cette façon, l'équipage mobile définit donc dans ce logement latéral 3 et dans ce mode de réalisation, trois chambres 20, 21 et 22, à volume variable et qui sont étanches.

La chambre 20 est formée entre le fond 23 du logement 3, sa paroi latérale 25, et la face 26 du piston 17 de l'équipage mobile 14. Cette chambre contient un moyen élastique comme par exemple un fluide compressible tel un gaz. Cette chambre peut être remplie à travers une valve 24 solidaire de la paroi 25 du logement 3.

La chambre 21 est définie entre la paroi 25 du logement 3, la cloison de séparation 15, la surface 28 de la tige 19 et la deuxième face 27 du piston 17.

On constate donc que cette chambre est de forme annulaire.

Enfin, la chambre 22, qui est aussi de forme annulaire, est formée entre la paroi 25 du logement 3, la cloison de séparation 15, la tige 19 et la face 29 du piston 18. L'autre face 30 du piston est tournée vers la cavité 2 et constitue une partie de la paroi de la cavité 2 tendant à la rendre étanche.

De la forme et la structure de ces chambres à volume variable, dans ce mode de réalisation, il s'en déduit que, soit les volumes des chambres 20 et 22 diminuent tandis que le volume de la chambre 21 augmente, ou soit que les volumes des chambres 20 et 22 augmentent, tandis que celui de la chambre 21 diminue suivant que l'équipage mobile 14 se déplace dans le premier des cas vers le fond 23 du logement et dans le second s'éloigne de ce fond 23.

Dans le mode de réalisation illustré sur la fig. 1, les chambres 21 sont reliées par des conduites 40 à l'entrée 41 d'un clapet anti-retour 42 dont la sortie 43 est reliée par une conduite 47 à l'entrée 44 d'un moyen de laminage 45 éventuellement contrôlable à volonté. La sortie 46 de ce moyen de laminage 45 est reliée par une conduite 48 à la cavité 2 définie précédemment, cette conduite débouche dans la cavité 2 à un endroit 69 qui est situé dans la cavité de façon à ce que ce soit un point haut en fonction de l'emplacement de la suspension oléopneumatique sur le véhicule.

De plus, les conduites 40 sont aussi reliées à la sortie 49 d'un clapet anti-retour 50 dont l'entrée 51 est reliée par une conduite 52 à la cavité 2 à un point 53 qui constitue un point bas par rapport au point 69.

Par contre, les chambres 22 sont reliées par des conduites 54 à l'entrée 55 d'un clapet anti-retour 56 dont la sortie 57 est reliée, à l'entrée 44 des moyens de laminage 45 mentionnés précédemment, par une conduite 58. La conduite 54 est aussi reliée à la sortie 59 d'un clapet anti-retour 60 dont l'entrée 61 est connectée à la conduite 52 pour relier cette entrée 61 au point bas 53 de la cavité 2.

Il doit être précisé que la cavité 2 définie par le carter 1 et les deux faces 30 des deux pistons 18 est étanche. Pour le fonctionnement de la suspension oléopneumatique, les chambres 21 et 22, les conduites partant de ces chambres jusqu'à la cavité 2 doivent être parfaitement remplies d'un fluide incompressible comme de l'huile tandis que la cavité 2 doit contenir du fluide dans sa partie basse 70 pour recouvrir en toutes circonstances le point bas 53, mais laisser en partie haute 71, au-dessus du niveau moyen 72 de l'huile, un volume de gaz pressurisé comme par exemple de l'azote, pour que d'une façon normale le niveau 72 soit situé en-dessous du point haut 69.

Le fonctionnement de la suspension oléopneumatique selon la fig. 1 est le suivant:

Il est tout d'abord précisé que les clapets anti-retour ne laissent passer du fluide que dans le sens de leur entrée vers leur sortie, comme défini dans la présente description.

On suppose que le véhicule sur lequel est montée cette suspension oléopneumatique roule et que la roue est soumise à un choc tendant à faire monter la roue par rapport au sol 74, c'est-à-dire dans le cas de la structure illustrée sur la fig. 1 à faire tourner le levier 7 supportant la roue 8 dans le sens senestorsum. Dans ce cas, l'axe 5 est entraîné en rotation dans le même sens et cette rotation est transformée par les biellettes 11 en un mouvement de translation des équipages mobiles 14 qui coulissent donc dans les logements 3 et 4 pour se rapprocher des fonds 23.

Dans ce cas, le fluide compressible est comprimé par les pistons 26 en réduisant les volumes des chambres 20, pour jouer le rôle équivalent à celui d'un ressort. Simultanément, le déplacement des équipages mobiles 14 entraîne une diminution des volumes des chambres 22 et une augmentation de ceux des chambres 21.

En diminuant le volume des chambres 22, le fluide incompressible est chassé de cette chambre et par les conduites 54 est envoyé dans les moyens de laminage 45 à travers le clapet anti-retour 56 étant donné que le clapet 60 ne peut être parcouru par le fluide quand il provient des chambres 22. Après avoir été laminé ou freiné dans les moyens de laminage 45, le fluide s'écoule dans la cavité 2 par la conduite 48.

Par contre, en augmentant le volume des chambres 21, il se produit une aspiration dans les conduites 40 qui, du fait des connexions des clapets 42 et 50, permet au fluide de la cavité 2 d'être aspiré par l'orifice 53 et par la conduite 52 de traverser le clapet 50 pour maintenir les chambres 21 pleines d'huile. Il est précisé que la pression appliquée à la sortie 59 du clapet 60 empêche le fluide de parcourir ce clapet 60.

Il s'ensuit donc que le choc est amorti par le laminage du fluide qui freine le déplacement des équipages mobiles et donc la rotation de la roue 8 et son levier 7.

Si le choc de la roue avait entraîné une rotation dextrorsum du levier 7, les équipages mobiles 14 auraient subi des glissements dans le sens opposé à celui mentionné précédemment. D'une façon très simplifiée dans ce cas les volumes des chambres 21 diminuent tandis que ceux des chambres 22 augmentent.

De ce fait, le fluide est chassé par les conduites 40 et traverse le clapet anti-retour 42 et les moyens de laminage 45 avant de s'écouler dans la cavité 2, mais, par contre, du fluide est aspiré dans la cavité 2 par la conduite 52 et compense l'augmentation de volume des chambres 22 en ayant traversé le clapet anti-retour 60 et parcouru les conduites 54.

Dans les deux cas, les chambres 20 contenant du fluide élastique jouent le rôle de ressort et de moyen pour ramener à la position d'équilibre l'ensemble des éléments mobiles de la suspension oléopneumatique et par conséquent le levier 7 et la roue 8.

On sait que dans une suspension du type selon la fig. 1, l'énergie mécanique de choc, notamment, transformée pour l'amortissement en une énergie calorifique qui entraîne un échauffement important du fluide d'amortissement surtout pour des véhicules lourds. Il est nécessaire de refroidir le fluide et compenser la dilatation de volume de ce fluide échauffé. Cette compensation est faite dans la cavité 2 au moyen du fluide pressurisé qui constitue un volume tampon. De plus, il apparaît que la quantité de fluide dans cette cavité peut varier et, en conséquence, le fluide pressurisé au-dessus du niveau 72 va absorber ces variations et permettre au niveau 72 de pouvoir monter ou descendre à volonté.

Pour pouvoir refroidir le fluide, l'ensemble des clapets anti-retour 42, 50, 56 et 60, les moyens de laminage 45 et les conduites reliant ces éléments sont réalisées et/ou disposées en partie dans un bloc autonome 75 qui sera juxtaposé au carter 1 comportant des moyens d'évacuation des calories. Le fluide échauffé se refroidit et reprend sa température d'équilibre à deux niveaux avant de revenir dans les chambres 21 ou 22. En premier dans le bloc 75, et en second dans la cavité 2 et la masse du carter 1.

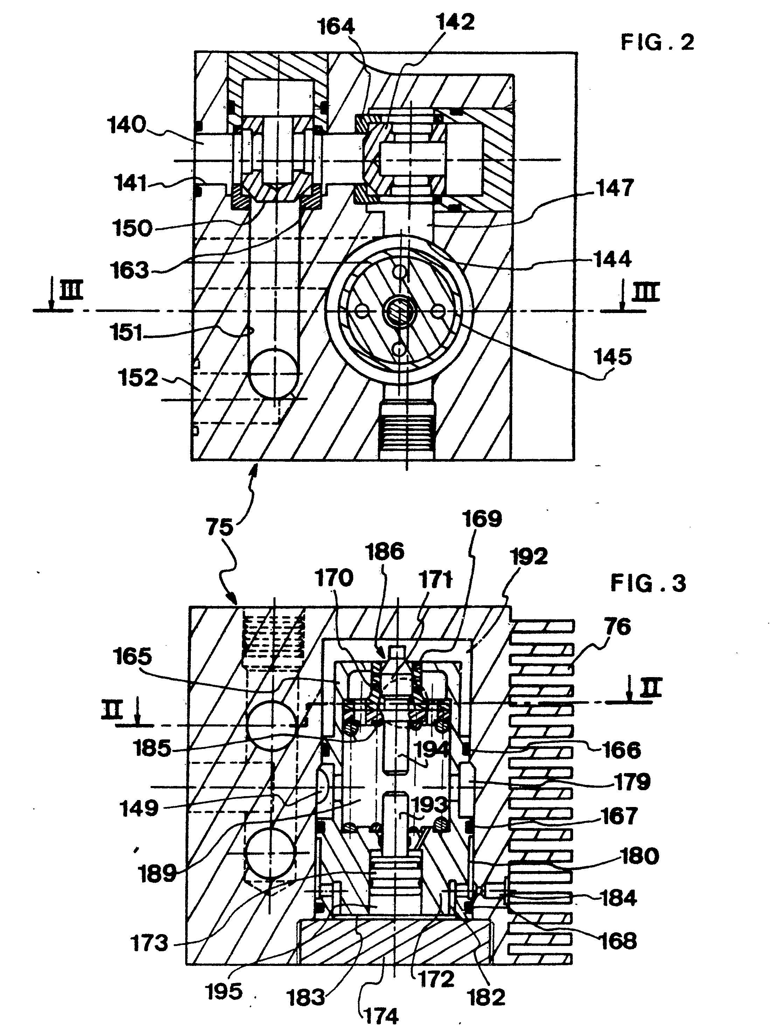

Un mode de réalisation du bloc 75 est illustré sur les figs 2 et 3 représentant deux coupes perpendiculaires.

La fig. 2 représente une coupe suivant II–II de la fig. 3 et la fig. 3 une coupe suivant III–III de la fig. 2.

Ces deux figures représentent le même mode de réalisation du bloc 75, en conséquence les mêmes références désignent les mêmes moyens.

Le bloc 75 est donc réalisé dans un matériau ayant une relativement bonne conductibilité thermique comme par exemple de la fonte ou de l'aluminium, et comporte sur une de ses faces au moins, des ailettes de refroidissement 76.

Avant de commencer la description structurelle interne du bloc 75 il est précisé que les figs. 1, 2 et 3 reprennent les mêmes éléments fonctionnels, et c'est ainsi que les deux clapets anti-retour 42 et 50 correspondent aux clapets 142 et 150; une portion de la conduite 40 à l'orifice 140; la conduite 47 à la portion de conduite 147; l'entrée des moyens de laminage 44 à l'orifice annulaire 144; les moyens de laminage 45 aux moyens 145; la conduite 46 à l'orifice 146 etc. Le bloc 75 comprend deux canaux perpendiculaires 141 et 151 qui enferment les deux clapets 150 et 142, le clapet 150 étant situé dans l'axe du canal 151 et le clapet 142 dans l'axe du canal 141.

Dans ces modes de réalisation, ces clapets sont constitués par des pièces cylindriques ayant un logement creux longitudinal fermé à une de ses extrémités pour former la partie coopérante avec un siège, et un orifice traversant radial pour permettre de mettre par exemple en communication l'entrée 140 avec la conduite 147.

D'une façon classique les clapets coopèrent avec des sièges 163 et 164 usinés ou rapportés comme sur la fig. 2.

Les deux clapets 156 et 160 correspondant aux clapets fonctionnels 56 et 60 de la fig. 1 sont identiques aux clapets 142 et 150 mais sont situés dans un plan qui se trouverait en avant par rapport à celui de la fig. 2.

C'est ainsi que les clapets 142 et 156 (non représentés) communiquent par leurs sorties au moyen du conduit 147 avec un logement 192 dans lequel sont disposés les moyens de laminage 145 avec leurs moyens de commande.

Dans ce logement 192 est montée une chemise 165 portant des joints d'étanchéité 166, 167 et 168. Cette chemise 165 supporte dans l'axe du logement 192 un siège 169 comportant une série d'orifices latéraux de faible diamètre 170. Ce siège 169 est avantageusement vissé dans le fond de cette chemise 165. Un clapet d'amortissement 186 est monté coulissant dans le centre du siège 169 et est soumis à la poussée contre ce siège par un ensemble de ressort 185, deux dans le mode de réalisation illustré. Le fond 172 de la chemise 165 emprisonne un piston 173, supportant une butée 193, monté coulissant dans un alésage 195 du fond 172 réalisé dans l'axe du clapet d'amortissement 186, de façon que la butée puisse coopérer avec une butée correspondante 194 solidaire du clapet 186.

L'alésage 195 est relié à une entrée 184 par l'intermédiaire d'une gorge circulaire 180, des perçages 181, une autre gorge annulaire 182 et une rainure 183 pratiquée dans le fond 172.

Bien entendu, tous ces éléments sont maintenus dans le bloc de matériau par un bouchon étanche de fermeture 174.

Le bloc autonome 75 d'amortissement fonctionne de la façon suivante. Ce fonctionnement sera explicité dans un seul cas, celui où les chambres 21 diminuent de volume, tandis que les chambres 22 augmentent de volume.

Ainsi, le fluide ou huile refoulé des chambres 21 maintient en arrivant par les orifices 140, le clapet anti-retour 150 contre son siège 163 qui est alors fermé, mais par contre, pousse le clapet 142 et pénètre par l'orifice 144 dans la cavité 192 au-dessus et autour de la chemise 165.

Cette huile ne peut ressortir de cette cavité 192 qu'en poussant le clapet d'amortissement 186 de manière à ce qu'il découvre un certain nombre d'orifices 170. Ce déplacement du clapet 186 se fait à l'encontre des ressorts 185 qui se compriment et équilibrent aussi la pression dans la cavité 192.

Il naît donc une pression sur le fluide dans cette cavité 192, le fluide pouvant, par les conduits qui la relient aux chambres 21, créer une force d'amortissement travaillant en sens opposé au sens de déplacement de l'équipage mobile 14. La position d'équilibre du clapet d'amortissement 186 et plus particulièrement sa tête 171 avec les ressorts 185 dépend de la répartition des orifices 170, de leur diamètre, de leur nombre et du débit du fluide, arrivant par les conduits 140 et 147, qui est proportionnel à la vitesse relative de la roue par rapport au véhicule.

Il est alors concevable que les caractéristiques des orifices 170 et des ressorts 185 soient ajustées en fonction des besoins de la loi d'amortissement désirée.

Une fois que l'huile a traversé les orifices 170 elle pénètre dans l'espace 189 en-dessous du clapet 186 et par la gorge circulaire 179 et l'orifice 149 retourne à la cavité 2 dans le carter par la conduite 48 (fig. 1).

Pour les chambres 22 augmentant de volume, le fluide est aspiré comme décrit précédemment.

On peut, dans certains cas, limiter la valeur de l'amortissement, pour répondre à des conditions particulières d'utilisation du véhicule.

Pour ce faire, il est possible par une source extérieure de pression (non représentée) de commander la position du piston-butée 173 qui peut occuper plusieurs positions en fonction de cette pression extérieure. Ainsi, la butée 193 vient contrarier le déplacement de la butée correspondante 194 du clapet 186.

Les figs 2 et 3, représentant un mode de réalisation concrète du bloc 75 représenté schématiquement sur la fig. 1, mettent en relief ses avantages.

Notamment, ce bloc ne comporte qu'un seul ensemble de moyens de laminage, qui est relativement compliqué dans sa réalisation alors que celle des clapets est relativement simple. Par contre, il n'est obtenu qu'un seul amortissement identique pour la compression et la détente.

Cependant, il peut être néanmoins nécessaire dans certaines circonstances d'obtenir des amortissements dissymétriques dissociés, pour la compression et la détente.

La fig. 4 représente sous forme schématique, un autre mode de réalisation du bloc d'amortissement représenté en 75 sur la fig. 1. Dans ce mode de réalisation, la conduite 40 (fig. 1) est reliée, d'une part, à l'entrée 444 de premiers moyens de laminage 445 dont la sortie 446 est reliée à la conduite 48 (fig. 1) et, d'autre part, à la sortie 449 d'un clapet anti-retour 450 dont l'entrée 451 est reliée à la conduite 52 (fig. 1).

De plus, la conduite 54 est reliée, d'une part, à l'entrée 544 de seconds moyens de laminage 545 dont la sortie 546 est reliée à la conduite 48 (fig. 1) et, d'autre part, à la sortie 459 d'un clapet anti-retour 460 dont l'entrée 461 est reliée à la conduite 52 (fig. 1).

L'avantage du dispositif selon la fig. 4 est qu'il permet un réglage éventuel dissocié des premiers et seconds moyens de laminage pour obtenir des amortissements différents par exemple en détente et en compression.

D'un point de vue pratique, ces clapets 450 et 460 ainsi que les premiers et seconds moyens de laminage commandables 445 et 545 peuvent être identiques dans leur réalisation à ceux représentés en coupe sur les figs 2 et 3, disposés dans un même bloc autonome, la réalisation de ce bloc ne présentant pas de difficultés pour l'homme de l'art connaissant le schéma selon la fig. 4 et les modes de réalisation suivant les figs 2 et 3.

Le fonctionnement du bloc selon la fig. 4 est donc le suivant:

Quand l'équipage mobile 14 se déplace vers le fond 23 des logements latéraux 3 et 4, le volume des chambres 21 augmente et aspire du fluide par les conduites 40, tandis que le volume des chambres 22 diminue et chasse de l'huile dans les conduites 54.

Dans ce cas, l'huile refoulée passe dans les moyens de laminage commandables 545 pour retourner dans la cavité 2, tandis que l'huile aspirée passe par le clapet 450 en provenant de la conduite 52 et ne peut traverser le clapet 460 du fait des oppositions de pression.

Quand l'équipage mobile 14 s'éloigne du fond 23, les variations de volume des chambres font que le fluide aspiré passe par le clapet 460 et que le fluide refoulé passe par les autres moyens de laminage 445.

On voit donc qu'il est possible de prévoir deux réglages différents pour les moyens de laminage 445 et 545, ainsi que des courbes d'amortissement différentes puisque les chemises 169 peuvent être percées d'orifices 170 ayant des diamètres par exemple définis suivant une loi déterminée.

On conçoit que les suspensions olépneumatiques selon l'invention, et comme décrites et illustrées sur les différentes figures, présentent de nombreux avantages.

Les conduites 40, 54, 48 et 52 seront avantageusement intégrées dans le carter 1, ce qui donne à cette suspension une conception modulaire facilitant la maintenance et les réglages.

L'huile d'amortissement pourra avoir un refroidissement parfait du fait de la circulation de l'huile échauffée, contribuant à la réalisation d'une suspension pouvant être soumise à des charges très souvent répétitives et pendant de longues périodes, sans accuser de fatigue et donc avoir une durée de vie très longue, tout en ayant en plus du fait de la configuration particulière du volume tampon autour des axes de transmission, bielle, etc., dans la cavité 2, une bonne lubrification de tous ces éléments.

**Revendications**

1. Suspension à amortisseur comprenant:
— des moyens fonctionnels (11, 13, 12, 10, 6, 7) de liaison avec un moyen de roulement (8),
— des moyens élastiques (20) exerçant une force antagoniste sur les moyens fonctionnels (11, 13, 12, 10, 6, 7),
— des moyens d'amortissement hydraulique coopérant avec lesdits moyens élastiques (20) et comprenant des premiers moyens (17, 19,...) limitant une première chambre (21) à volume variable de fluide incompressible, des deuxièmes moyens (18, 19,...) limitant une deuxième chambre (22) à volume variable de fluide incompressible, les volumes de ces chambres (21, 22) variant en sens opposés, des moyens (1) limitant un volume tampon (2), des moyens de laminage (45, 145,...) du fluide incompressible, des moyens de liaison entre lesdites chambres (21, 22) et le volume tampon (2), caractérisée en ce que des moyens commandables (42, 50) sont montés sur les moyens de liaison pour raccorder les chambres (21, 22) au volume tampon (2) à travers les moyens de laminage (45, 145,....) quand le volume de ces chambres (21, 22) diminue, et pour raccorder par une liaison directe (52) ces mêmes chambres (21, 22) au même volume tampon (2) quand leur volume augmente.

2. Suspension selon la revendication 1, caractérisée par le fait que les premiers moyens pour faire varier le volume d'une première chambre de fluide incompressible sont constitués par un premier piston (17) coulissant dans un premier logement (3) par rapport à une première paroi (15) de ce logement, ledit premier piston (17) étant relié auxdits moyens fonctionnels de liaison (11...).

3. Suspension selon l'une des revendications 1 et 2, caractérisée par le fait que les seconds moyens pour faire varier le volume d'une seconde chambre de fluide incompressible sont constitués par un second piston (18) coulissant dans un second logement (3) par rapport à une seconde paroi (15) de ce logement, ledit second piston (18) étant relié auxdits moyens fonctionnels de liaison (11...).

4. Suspension selon les revendications 2 et 3, caractérisée par le fait que lesdits premier et second logements (3) sont séparés par une même paroi de séparation (15) constituant les première et seconde parois, lesdits premier et second pistons (17, 18) étant solidaires d'une tige (19) traversant ladite paroi de séparation (15).

5. Suspension selon la revendication 4, caractérisée par le fait que lesdits moyens fonctionnels de liaison comportent au moins un axe de liaison (11) couplé à ladite tige (19) ledit axe étant situé dans une cavité (2).

6. Suspension selon la revendication 5, caractérisée par le fait que ladite cavité (2) est étanche.

7. Suspension selon la revendication 6, caractérisée par le fait que ladite cavité (2) constitue ledit volume tampon.

8. Suspension selon l'une des revendications précédentes, caractérisée par le fait que lesdits moyens commandables comportent au moins un clapet anti-retour (42...142...).

9. Suspension selon l'une des revendications précédentes, caractérisée par le fait que les moyens de laminage comportent une chemise (165) comportant une pluralité d'orifices (170) de diamètre déterminé, un clapet d'amortissement (186) coopérant avec ladite chemise (165) apte à se déplacer en regard desdits orifices (170) à l'encontre d'un ressort (185).

10. Suspension selon la revendication 9, caractérisée par le fait qu'elle comporte des moyens (193...) pour contrôler le déplacement dudit clapet d'amortissement.

11. Suspension selon la revendication 10, caractérisée par le fait que lesdits moyens pour contrôler le déplacement dudit clapet d'amortissement comportent une butée (193) solidaire d'un piston coulissant de commande (173), apte à être positionné par une source de fluide, ladite butée (193) étant disposée en regard dudit clapet d'amortissement (186) pour en limiter son déplacement en fonction de la position dudit piston coulissant.

12. Suspension selon l'une des revendications précédentes, caractérisée par le fait qu'au moins lesdits moyens de laminage sont réalisés dans un bloc (75), ledit bloc comportant des moyens d'évacuation de calories (76).

13. Suspension selon la revendication 12, caractérisée par le fait que lesdits moyens d'évacuation comportent des ailettes (76).

**Claims**

1. Suspension with damping comprising:
functional means (11, 13, 12, 10, 6, 7) for connection with a rolling means (8),
resilient means (20) exerting a return force on the functional means (11, 13, 12, 10, 6, 7),
hydraulic damping means cooperating with the said resilient means (20) and comprising first means (17, 19,...) delimiting a first chamber (21) with a variable volume of incompressible fluid, second means (18, 19,...) delimiting a second chamber (22) with a variable volume of incompressible fluid, the volumes of these chambers (21, 22) varying in opposite directions, means (1) delimiting a buffer volume (2), means for throttling (45, 145...) the incompressible fluid, connection means between the said chambers (21, 22) and the buffer volume (2), characterised in that controllable means (42, 50) are mounted on the connection means for connecting the chambers (21, 22) to the buffer volume (2) through the throttling means (45, 145,...) when the volume of these chambers (21, 22) diminishes, and for connecting by a direct connection (52) these same chambers (21, 22) to the same buffer volume (2) when their volume increases.

2. Suspension according to claim 1, characterised by the fact that the first means for varying the volume of a first chamber of incompressible fluid are constituted by a first piston (17) sliding in a first housing (3) with respect to a first wall (15) of this housing, the said first piston (17) being connected to the said functional connection means (11...).

3. Suspension according to claim 1 or claim 2, characterised by the fact that the second means for varying the volume of a second chamber of incompressible fluid are constituted by a second piston (18) sliding in a second housing (3) with respect to a second wall (15) of this housing, the said second piston (18) being connected to the said functional connection means (11...).

4. Suspension according to claims 2 and 3, characterised by the fact that the said first and second housings (3) are separated by the same separation wall (15) constituting the first and second walls, the said first and second pistons (17, 18) being rigid with a shaft (19) crossing the said separation wall (15).

5. Suspension according to claim 4, characterised by the fact that the said functional connection means comprise at least one connecting rod (11) coupled to the said shaft (19) the said rod being situated in a cavity (2).

6. Suspension according to claim 5, characterised by the fact that the said cavity (2) is fluid tight.

7. Suspension according to claim 6, characterised by the fact that the said cavity (2) constitutes the said buffer volume.

8. Suspension according to any one of the preceding claims, characterised by the fact that the said controllable means comprise at least one non-return valve (42...142...).

9. Suspension according to any one of the preceding claims, characterised by the fact that the throttling means comprise a sleeve (165) having a plurality of apertures (170) of determined diameter, a damping valve (186) cooperating with the said sleeve (165) adapted to be displaced across the said apertures (170) against a spring (185).

10. Suspension according to claim 9, characterised by the fact that it comprises means (193...) for controlling displacement of the said damping valve.

11. Suspension according to claim 10, characterised by the fact that the said means for controlling the displacement of the said damping valve comprise an abutment (193) solid with a sliding control piston (173), adapted to be positioned by a source of fluid, the said abutment (193) being disposed opposite the said damping valve (186) for limiting its displacement as a function of the position of the said sliding piston.

12. Suspension according to any one of the preceding claims, characterised by the fact that at least the throttling means are arranged in a block (75), the said block having cooling means (76).

13. Suspension according to claim 12, characterised by the fact that the said cooling means comprise fins (76).

**Patentansprüche**

1. Dämpfungsaufhängung mit:
- funktionellen Verbindungseinrichtungen (11, 13, 12, 10, 6, 7) mit einer Rolleinrichtung (8),
- elastischen Einrichtungen (20), welche auf die funktionellen Einrichtungen (11, 13, 12, 10, 6, 7) eine Gegenkraft ausüben,
- hydraulischen Dämpfungseinrichtungen, welche mit den genannten elastischen Einrichtungen (20) zusammenwirken und welche erste Einrichtungen (17, 19,...), die eine erste Kammer (21) variablen Volumens mit inkompressiblem Fluid begrenzen, zweite Einrichtungen (18, 19,...), welche eine zweite Kammer (22) variablen Volumens mit inkompressiblem Fluid begrenzen, wobei die Volumina dieser Kammern (21, 22) im entgegengesetzten Sinne variieren, Einrichtungen (1), welche ein Puffervolumen (2) begrenzen, Drosselungseinrichtungen (45, 145,...) des inkompressiblen Fluids, Einrichtungen zur Verbindung zwischen den genannten Kammern (21, 22) und dem Puffervolumen (2), umfassen, dadurch gekennzeichnet, dass Steuereinrichtungen (42, 50) auf den Verbindungseinrichtungen montiert sind, um die Kammern (21, 22) mit dem Puffervolumen (2) über die Drosselungseinrichtungen (45, 145,...) zu verbinden, wenn das Volumen dieser Kammern (21, 22) kleiner wird, und um die gleichen Kammern (21, 22), durch eine direkte Verbindung (52), mit dem gleichen Puffervolumen (2) zu verbinden, wenn ihr Volumen grösser wird.

2. Aufhängung nach Anspruch 1, dadurch gekennzeichnet, dass die ersten Einrichtungen zum Variieren des Volumens einer ersten Kammer mit inkompressiblem Fluid durch einen ersten Kolben (17) gebildet sind, welcher sich in einem ersten Bereich (3) im Verhältnis zu einer ersten Wand (15) dieses Bereichs hin- und herbewegt, wobei der genannte erste Kolben (17) mit den genannten funktionellen Verbindungseinrichtungen (11,...) verbunden ist.

3. Aufhängung nach einem der Ansprüche 1 und 2, dadurch gekennzeichnet, dass die zweiten Einrichtungen zum Variieren des Volumens einer zweiten Kammer mit inkompressiblem Fluid durch einen zweiten Kolben (18) gebildet sind, welcher sich in einem zweiten Bereich (3) im Verhältnis zu einer zweiten Wand (15) dieses Bereichs hin- und herbewegt, wobei der genannte zweite Kolben (18) mit den genannten funktionellen Verbindungseinrichtungen (11,...) verbunden ist.

4. Aufhängung nach den Ansprüchen 2 und 3, dadurch gekennzeichnet, dass die genannten ersten und zweiten Bereiche (3) durch ein und dieselbe Trennwand (15) getrennt sind, welche die ersten und zweiten Wände bildet, wobei die genannten ersten und zweiten Kolben (17, 18) mit einem Schaft (19) fest verbunden sind, welcher die genannte Trennwand (15) durchquert.

5. Aufhängung nach Anspruch 4, dadurch gekennzeichnet, dass die genannten funktionellen Verbindungseinrichtungen wenigstens eine Verbindungsachse (11) umfassen, welche an den genannten Schaft (19) gekoppelt und in einem Hohlraum (2) angeordnet ist.

6. Aufhängung nach Anspruch 5, dadurch gekennzeichnet, dass der genannte Hohlraum (2) dicht ist.

7. Aufhängung nach Anspruch 6, dadurch gekennzeichnet, dass der genannte Hohlraum (2) das genannte Puffervolumen bildet.

8. Aufhängung nach einem der vorhergehenden Ansprüche, dadurch gekennzeichnet, dass die genannten Steuereinrichtungen wenigstens ein Rückschlagventil (42...142...) umfassen.

9. Aufhängung nach einem der vorhergehenden Ansprüche, dadurch gekennzeichnet, dass die Drosselungseinrichtungen eine Hülse (165) aufweisen, welche eine Vielzahl von Öffnungen (170) mit festgelegtem Durchmesser aufweist, wobei ein Dämpfungsventil (186), welches gegenüber von den genannten Öffnungen (170) entgegen einer Feder (185) verschoben werden kann, mit der genannten Hülse (165) zusammenwirkt.

10. Aufhängung nach Anspruch 9, dadurch gekennzeichnet, dass sie Einrichtungen (193...) zur Kontrolle der Verschiebung des genannten Dämpfungsventils umfasst.

11. Aufhängung nach Anspruch 10, dadurch gekennzeichnet, dass die genannten Einrichtungen zur Kontrolle der Verschiebung des genannten Dämpfungsventils einen Anschlagstift (193) aufweisen, welcher mit einem sich hin- und herbewegenden Steuerkolben (173) fest verbunden ist, der durch eine Fluid-Quelle positioniert werden kann, wobei der genannte Anschlagstift (193) gegenüber von dem genannten Dämpfungsventil (186) verschoben werden kann, um so seine Verschiebung als Funktion der Position des genannten sich hin- und herbewegenden Kolbens zu begrenzen.

12. Aufhängung nach einem der vorhergehenden Ansprüche, dadurch gekennzeichnet, dass wenigstens die genannten Drosselungseinrichtungen in einem Block (75) verwirklicht sind, wobei der genannte Block Einrichtungen zur Abführung von Wärmeenergie (76) aufweist.

13. Aufhängung nach Anspruch 12, dadurch gekennzeichnet, dass die genannten Einrichtungen zur Abführung Rippen (76) aufweisen.

FIG.1

FIG.4

FIG. 2

FIG. 3